# FASCICULE DE BREVET EUROPEEN

(11) **EP 1 610 082 B1**
(45) Date de publication et mention de la délivrance du brevet: **11.07.2007**
(21) Numéro de dépôt: 05370014.2
(22) Date de dépôt: 15.06.2005
(51) Int. Cl.: F28D 7/08, F28D 7/00

(54) **Dispositif de régulation de la température d'un fluide à traiter**
Vorrichtung zur Temperaturregelung eines zu behandelnden Fluids
Device for temperature control of a fluid to be treated

(30) Priorité: 25.06.2004 FR 0407003
(43) Date de publication de la demande: 28.12.2005
(73) Titulaire: GEA Ergé-Spirale et Soramat, S.A, 62410 Wingles (FR)
(72) Inventeur: Lemaire, Didier, 62660 Beuvry (FR)
(74) Mandataire: Hennion, Jean-Claude

(56) Documents cités:
- EP-A- 1 081 445
- DE-A1- 3 011 839
- DE-A1- 19 707 158
- DE-A1- 19 907 250
- FR-A- 2 831 949
- US-A- 4 291 756
- US-A- 5 228 504
- PATENT ABSTRACTS OF JAPAN vol. 002, no. 050 (M-015), 10 avril 1978 (1978-04-10) -& JP 53 011343 A (MITSUBISHI ELECTRIC CORP), 1 février 1978 (1978-02-01)
- PATENT ABSTRACTS OF JAPAN vol. 2003, no. 12, 5 décembre 2003 (2003-12-05) -& JP 2003 336974 A (TOYO RADIATOR CO LTD), 28 novembre 2003 (2003-11-28)

## Description

La présente invention concerne un dispositif de régulation de la température d'un fluide à traiter.

Plus précisément, la présente invention se situe dans le domaine de la régulation de la température d'un fluide à partir d'un matériau à changement de phase contenu dans une enceinte.

Le dispositif sera adaptable indifféremment à des applications dans lesquelles le fluide à traiter devra être refroidi ou réchauffé.

Dans le cadre de la présente demande, il sera détaillé un mode de réalisation dans lequel on cherche à refroidir le fluide ; toutefois, il ne s'agit que d'une application fournie à titre d'exemple et il sera tout à fait évident pour l'homme du métier de choisir des fluides et des températures de fluide permettant d'obtenir un réchauffement du fluide à traiter.

Il existe deux types de dispositifs statiques utilisant pour refroidir un fluide l'énergie emmagasinée par un PCM lors de son changement de phase solide à liquide.

Un premier type de dispositif comporte des enveloppes fermées, généralement des tubes qui contiennent le matériau à changement de phase.

Un second type de dispositif dans lequel est issu le dispositif de l'invention comporte une enceinte contenant le matériau à changement de phase comportant un circuit de distribution permettant :
- soit la circulation d'un fluide réfrigérant,
- soit la circulation alternative du fluide réfrigérant et du fluide à traiter dans le circuit de distribution.

Dans ce dispositif, dans la première étape qui constitue la phase de charge du dispositif, le fluide réfrigérant en circulation permet la formation de manchons de glace plus ou moins irréguliers à la surface des tubes.

Dans la seconde étape, qui constitue la phase d'utilisation ou de décharge du dispositif, l'eau de l'enceinte en contact avec les manchons de glace est refroidie et utilisée soit directement, soit à travers un échangeur thermique pour le refroidissement du fluide à traiter.

Ce type de dispositif ne peut être utilisé que de manière discontinue, c'est-à-dire en batterie, certains modules étant en phase de charge pendant que d'autres sont en phase d'utilisation.

Un autre inconvénient de ce type de dispositif est que le fluide réfrigérant n'est jamais en contact avec le fluide à traiter, le transfert thermique ne peut se faire que par le matériau à changement de phase, ce qui ne permet pas de réguler rapidement la température de fluide à traiter à moins de disposer d'un grand nombre de modules.

De plus, dans le second type de dispositif décrit, se pose le problème de la diffusion thermique du fluide réfrigérant, l'échange thermique étant en effet très mauvais entre le tube contenant le fluide réfrigérant et le matériau à changement de phase lorsqu'une partie de ce dernier est transformée en glace au voisinage du tube.

En effet, au-delà de plusieurs centimètres de glace, le transfert thermique est réduit, ce qui empêche le changement de phase liquide vers la phase solide du PCM au-delà d'une certaine épaisseur.

Dans la pratique, les constructeurs sont donc contraints de disposer les tubes du circuit de distribution de manière rapprochée permettant d'homogénéiser au mieux la température du matériau à changement de phase mais interdisant de ce fait l'accès aux zones internes du faisceau de tubes à la portion liquide du PCM chargée de véhiculer l'énergie.

Le document DE-A-19907250 montre un dispositif de régulation de la température d'un fluide dans lequel les trois fluides peuvent être mis en présence simultanément, permettant une grande réactivité du dispositif.

Le but de la présente invention est de proposer un dispositif de régulation adaptable en fonction du mode de fonctionnement du dispositif.

L'invention a ainsi pour objet un dispositif de régulation de la température d'un fluide A.

Selon l'invention, ledit dispositif comprend :
- une enceinte contenant un matériau à changement de phase (PCM),
- au moins deux conduites de distribution, disposées dans ladite enceinte, permettant la circulation séparée du fluide A et d'un fluide B, vecteur d'énergie thermique,
- des moyens d'échange thermique permettant simultanément un transfert direct d'énergie entre les fluides A et B et un transfert indirect par restitution d'énergie transmise par le fluide B et stockée par le matériau à changement de phase.
- des moyens de distribution permettant de modifier la répartition des circuits de distribution entre chaque fluide (A,B) en fonction du mode de fonctionnement du dispositif.

La présente invention vise également une installation de régulation comportant un dispositif de régulation avec les caractéristiques précitées.

D'autres caractéristiques et avantages de la présente invention apparaîtront plus clairement à la lecture de la description ci-après d'un exemple préféré de réalisation, dans lequel la description n'est donnée qu'à titre d'exemple non limitatif et en référence aux dessins annexés parmi lesquels :
- la figure 1 représente une vue en coupe longitudinale d'un mode de réalisation du dispositif conformément à l'invention,
- la figure 2 représente une vue transversale du mode de réalisation présenté à la figure 1.

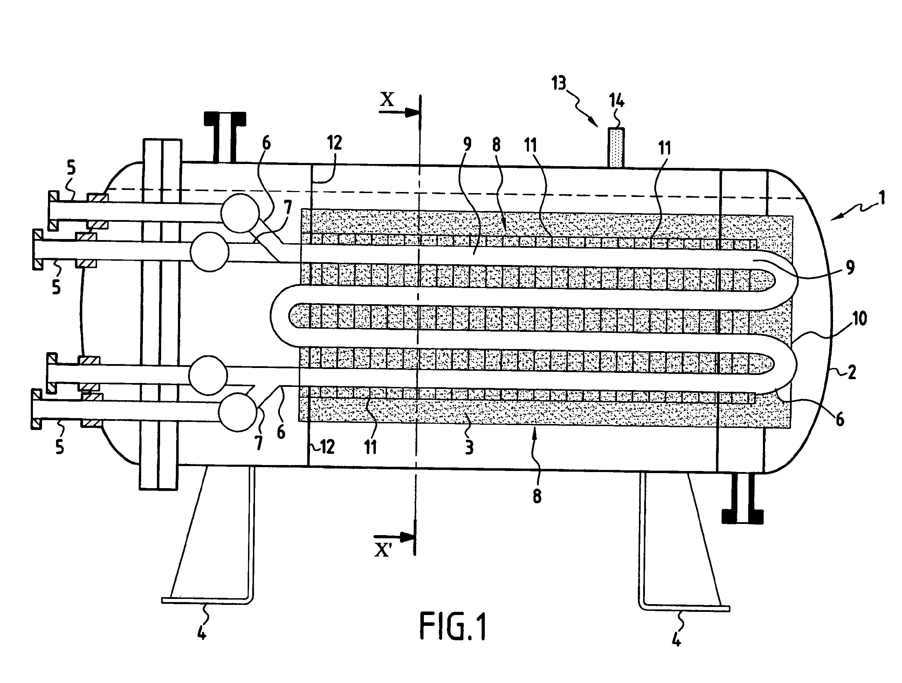

En se reportant principalement à la figure 1, on voit que le dispositif de régulation 1 comprend une enceinte 2, contenant un matériau à changement de phase 3 dit PCM.

Dans cet exemple de réalisation, l'enceinte 2 a une forme sensiblement cylindrique avec des fonds soudés ou boulonnés.

Il s'agira, de préférence, d'une enceinte de type cuve ou réservoir parallélépipédique.

Toutefois, on pourra également utiliser pour réaliser ladite enceinte 2, également, une piscine, ouverte ou non à l'atmosphère.

Ladite enceinte 2 repose sur des pieds 4 et comprend des ouvertures 5 permettant l'introduction dans ladite enceinte des fluides A,B et du PCM.

A ce sujet, le PCM pourra être introduit en circulation forcée à l'aide d'une pompe, non représentée dans les dessins annexés.

Le choix du PCM dépend des applications prévues pour le dispositif de régulation.

Il pourra notamment s'agir d'un matériau à changement de phase, liquide ou solide, et par exemple de l'eau traitée.

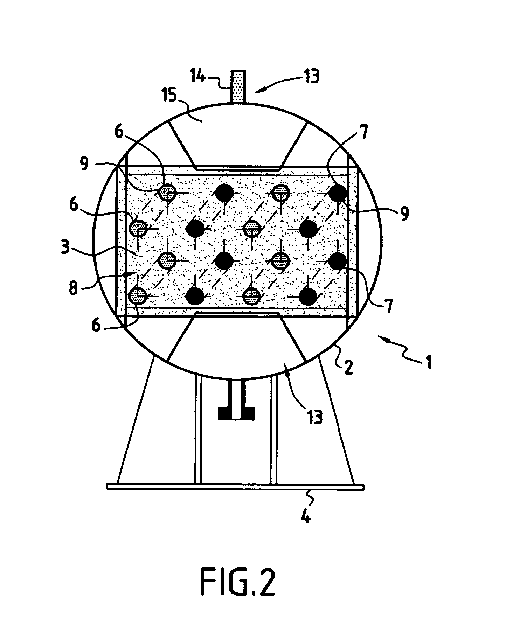

En se reportant principalement à la figure 2, on voit que le dispositif de régulation 1 comprend au moins deux conduites de distribution 6,7, disposées dans ladite enceinte 2, permettant la circulation séparée et simultanée du fluide A et d'un fluide B, vecteur d'énergie thermique.

Dans la figure 2, les conduites de distribution 6 permettent la circulation d'un fluide A, tandis que les conduites de circulation 7 permettent la circulation du fluide B.

On voit dans cette figure qu'il y a alternance entre les conduites 6 et les conduites 7.

Des moyens de distribution permettant de modifier la répartition des conduites de distribution 6, 7 entre chaque fluide A, B en fonction du mode de fonctionnement du dispositif de régulation 1 sont prévus.

On pourra, à cet effet, prévoir d'alimenter un nombre de conduites de distribution affectées à la circulation d'un fluide A plus important que ceux affectés à la circulation du fluide B lors des phases de décharge dudit dispositif 1.

A l'inverse, on prévoira un nombre plus important de conduites 7 lors de la phase de charge dudit dispositif 1.

Enfin, on pourra prévoir que les conduites 6, 7 pourront être actives ou non, c'est-à-dire avec du fluide A ou B circulant ou stagnant en fonction de l'utilisation du dispositif 1.

Ledit dispositif de régulation 1 comprend également des moyens d'échange thermique 8 permettant simultanément un transfert direct d'énergie entre les fluides A et B et un transfert indirect par restitution d'énergie transmise par le fluide B et stockée par le matériau à changement de phase.

De manière avantageuse, les conduites de distribution 6, 7 seront constituées de tubes 9 et de coudes 10 de manière à former un serpentin.

De préférence, les plans contenant ces serpentins sont parallèles entre eux.

Lesdits moyens d'échange thermique 8 comprennent une pluralité d'ailettes 11 comportant des ouvertures pour le passage des conduites 6, 7 et fixées sur la surface extérieure desdites conduites 6, 7.

Ces ailettes 11 pourront être serties, brassées ou soudées sur les tubes 9 de manière à minimiser la résistance thermique au passage de la chaleur entre chaque ailette 11 et chaque tube 9.

On prévoit également des chicanes 12, ces dernières étant destinées à assurer le maintien des conduites de distribution 6, 7 dans l'enceinte 2.

On pourra prévoir que ces chicanes 12 supportant les tubes 9 soient intercalées entre les ailettes 11 et supportent les tubes 9.

Dans une variante avantageuse de l'invention, on pourra prévoir que la face interne des tubes 9 comprend des moyens d'intensification d'échange, ces moyens pouvant être constitués de micro-ailettes ou d'inserts.

Les ailettes 11 extérieures seront de préférence disposées parallèlement entre elles.

On choisira l'épaisseur des ailettes 11 en fonction de la réactivité souhaitée pour le dispositif 1.

Ainsi, plus on souhaitera privilégier un transfert direct entre les fluides A, B, plus l'épaisseur de l'ailette sera importante.

A l'inverse, si on souhaite privilégier le transfert indirect entre les fluides A, B, c'est-à-dire un transfert du fluide B vers le matériau à changement de phase, puis une restitution de l'énergie transmise du matériau à changement de phase vers le fluide A, on utilisera une épaisseur pour chaque ailette 11 moins importante.

De préférence, l'épaisseur de chaque ailette 11 sera comprise entre 0,1 et 1 mm.

De même, en fonction des applications, on pourra prévoir un pas entre deux ailettes 11 variable et de préférence compris entre 2 et 20 mm.

Selon une variante de l'invention, on pourra prévoir que l'extrémité des ailettes 11 se prolonge à l'extérieur du volume défini par les contours des conduites de distribution 6, 7.

Cette disposition permet d'augmenter le transfert thermique entre le fluide B et le PCM disposé au-delà du volume défini par les conduites de distribution 6, 7.

A titre d'exemple, 60% à 70% du volume du PCM de l'enceinte 2 sera contenu dans le volume défini par les contours des conduites de distribution 6, 7.

Le prolongement des ailettes 11 permettra d'améliorer le transfert thermique vers les 30% à 40% du volume du PCM situé hors du volume défini par les contours des conduites de distribution 6, 7.

Il est important de noter à ce niveau que pour augmenter le phénomène de convection dans le matériau à changement de phase, on pourra également prévoir des moyens de brassage non représentés dans les dessins annexés, ces moyens de brassage permettant une certaine circulation du matériau à changement de phase à l'intérieur de l'enceinte 2.

Une grande variété de géométrie est utilisable pour les conduites de distribution 6, 7.

A titre purement indicatif, on pourra utiliser des tubes 9 en acier ou en cuivre avec des diamètres extérieurs de 6,35 à 25,4 mm pour une épaisseur de 0,3 à 3 mm.

Les ailettes 11 pourront être réalisées en acier, en cuivre ou en aluminium avec un pas de poinçonnage des trous pour tube de 16 à 80 mm.

Les conduites de distribution 6, 7 seront disposées de manière à optimiser les transferts thermiques entre les fluides A et B et le matériau à changement de phase.

Selon un mode particulier de réalisation, le dispositif de régulation 1 comporte des moyens de mesure 13 de la quantité de matériau à changement de phase en au moins une de ces phases.

Lesdits moyens de mesure 13 comprennent un capteur de pression 14 d'un gaz 15 contenu dans l'enceinte 2, la pression dudit gaz 15 variant en fonction de la quantité de PCM dans chacune de ces phases.

Ce dispositif de mesure permet d'évaluer avec précision le volume du matériau à changement de phase et, par conséquent, sa proportion de phase solide.

Ladite poche de gaz 15 est disposée en partie supérieure de l'enceinte 2 et permet le changement de volume du matériau à changement de phase sans préjudice pour l'enceinte 2.

On pourra également associer ce dispositif de mesure 13 à un dispositif complémentaire (non représenté) permettant la prise de température du matériau à changement de phase entre les ailettes 11 et permettant d'obtenir les informations nécessaires au calcul de l'énergie stockée.

Compte tenu de la structure du dispositif de régulation 1, l'étape de charge est aisée à mettre en oeuvre.

Elle débute par la mise en circulation dans les conduites 6 du fluide réfrigérant B, le fluide A dont la température est à réguler étant, soit statique, soit circulant à faible vitesse dans les autres conduites 7.

Le matériau à changement de phase cède alors sa chaleur au travers de l'ensemble formé par les conduites de distribution 6 et les ailettes 11 au fluide B pour passer de l'état liquide à l'état solide.

La phase de décharge s'effectue de manière symétrique.

Le dispositif de régulation permet donc une charge en continu grâce à la présence simultanée des fluides A, B dans le même échangeur.

De nombreuses possibilités de régulation sont donc envisageables en continu ou de manière discontinue en réglant notamment des paramètres tels que :
- le débit des fluides A, B,
- le nombre de conduites associées à A ou à B,
- la température et la nature des fluides A et B.

L'ensemble de ces paramètres permet notamment de modifier la quantité de chacune des phases du PCM présente dans l'enceinte 2 permettant de réguler en continu la quantité de frigories disponibles.

Le dispositif de régulation 1 permet donc de lisser les variations de régulation de température du fluide à traiter A.

Nous entrons maintenant dans le détail d'un exemple de fonctionnement du dispositif dans lequel, à l'instant initial, tout le matériau à changement de phase se trouve sous sa forme liquide avec une phase de besoin nul pour le fluide A à traiter.

Le fluide B est par exemple de l'eau glycolée introduite à -7°C dans l'échangeur en provenance de l'évaporateur d'un groupe de froid.

Le PCM est par exemple de l'eau additionnée de sels anti-corrosion qui change d'état à 0°C.

Le fluide A est par exemple de l'eau glycolée de retour à +11°C d'un circuit de climatisation à ramener à +6°C.

Le fluide B est mis en circulation dans l'échangeur via des moyens de mise en circulation et par exemple une pompe. La pompe qui force le fluide A est à l'arrêt.

Le transfert thermique s'établit d'abord entre le matériau à changement de phase contenu dans l'enceinte 2 et le fluide B au travers de l'ensemble formé par les conduites de distribution 7 et les moyens d'échange thermique 8.

Le transfert de chaleur entraîne, d'une part, l'élévation de la température du fluide B et, d'autre part, le refroidissement puis le passage de l'état liquide à l'état solide du matériau à changement de phase contenu entre et aux alentours des ailettes 11.

Le fluide A peut alors être mis en circulation dans les conduites de distribution 6.

Le transfert thermique s'établit entre le matériau à changement de phase contenu dans l'enceinte 2 et le fluide A au travers des tubes 9 associés aux ailettes 11.

Ce transfert de chaleur entraîne, d'une part, le refroidissement de la température du fluide A et, d'autre part, le passage de l'état solide à l'état liquide du matériau à changement de phase contenu entre et aux alentours des ailettes 11.

En fonction du point de fonctionnement choisi, on régulera alors le débit du fluide B.

Ainsi, lorsque le débit est réduit et que la quantité d'énergie apportée par le fluide B est inférieure à celle emportée par le fluide A, la quantité de PCM solide est en diminution à l'instar de la quantité d'énergie stockée.

Dans le cas contraire, la quantité de PCM solide augmente.

Il est donc possible de faire varier dynamiquement la quantité d'énergie stockée et, simultanément, satisfaire à la fonction de refroidissement du fluide A.

La réactivité du système est permise par le fait que les ailettes 11 plates continues sont communes aux conduites 6, 7 contenant les fluides A, B.

Une partie de la chaleur est donc transmise par conduction via les ailettes 11 entre les tubes du fluide A et les tubes du fluide B.

Une autre fraction de la chaleur transmise est déterminée par la température des ailettes 11 en contact avec le matériau à changement de phase.

Le dispositif de régulation 1 permettant de lisser les variations de besoin énergétique du fluide A à traiter et permettant de régler finement la température du fluide B, il sera possible pour l'homme du métier de fixer des puissances du groupe de froid nécessaire plus faibles qu'avec des dispositifs de régulation classiques dans lesquels des phases de charge succèdent à des phases de décharge.

Bien entendu, l'homme du métier pourra également adapter le dispositif en fonction de la taille du système de stockage et de la réactivité de l'échangeur voulu en jouant notamment sur les paramètres suivants :
- le type des conduites de circulation,
- la taille et la disposition des conduites 6, 7.
- le type d'ailettes 11,
- les dimensions et le pas des ailettes 11.

La présente invention concerne également l'installation de régulation de la température d'un fluide A comprenant un dispositif de régulation 1 tel que précité, un évaporateur de groupe frigorifique dans lequel circule un fluide B relié au dispositif de régulation 1, ou directement le fluide frigorigène à évaporer relié au dispositif de régulation 1, un réseau de distribution du fluide A et des moyens de raccordement entre le réseau dans lequel circule le fluide A et le dispositif de régulation 1.

Bien entendu, d'autres modes de réalisation à la portée de l'homme de l'art auraient pu être envisagés sans pour autant sortir du cadre de l'invention défini par les revendications ci-après.

## Revendications

1. Dispositif de régulation de la température d'un fluide à traiter (A) comprenant :
- une enceinte (2) contenant un matériau à changement de phase (PCM),
- au moins deux conduites (6, 7) de distribution, disposées dans ladite enceinte (2), permettant la circulation séparé du fluide à traiter (A) et d'un fluide (B) vecteur d'énergie thermique,
- des moyens d'échange thermique (8) permettant simultanément un transfert direct d'énergie entre les fluides (A) et (B) et un transfert indirect par restitution d'énergie transmise par le fluide (B) vecteur d'énergie thermique et stockée par le matériau à changement de phase,
**caracterisé en ce qu'**il comprend des moyens de distribution permettant de modifier la répartition des circuits de distribution entre chaque fluide (A, B) en fonction du mode de fonctionnement du dispositif.

2. Dispositif de régulation selon la revendication 1, dans lequel les moyens d'échange thermique comportent une pluralité d'ailettes (11) comportant des ouvertures pour le passage des conduites (6,7) et fixées sur la surface extérieure desdites conduites (6,7).

3. Dispositif de régulation selon la revendication 2, dans lequel ladite ailette (11) est constituée d'une plaque.

4. Dispositif de régulation selon la revendication 2 ou 3, dans lequel l'épaisseur de chaque ailette (11) est comprise entre 0,1 et 1 mm.

5. Dispositif de régulation selon l'une quelconque des revendications 2 à 4, dans lequel les ailettes (11) sont disposées parallèlement entre elles.

6. Dispositif de régulation selon la revendication 5, dans lequel le pas entre les deux ailettes est compris entre 2 et 20 mm.

7. Dispositif de régulation selon l'une quelconque des revendications 2 à 6, dans lequel l'extrémité des ailettes se prolonge à l'extérieur du volume défini par les contours des conduites de distribution (6, 7).

8. Dispositif de régulation selon l'une quelconque des revendications 1 à 7, dans lequel 60% à 70% du volume total du PCM de l'enceinte est contenu dans le volume défini par les conduites de distribution.

9. Dispositif de régulation selon l'une quelconque des revendications 1 à 8, dans lequel les conduites de distribution (6, 7) comportent des moyens d'intensification d'échanges sur leur face interne.

10. Dispositif de régulation selon l'une quelconque des revendications 1 à 9, dans lequel chaque conduite forme un serpentin, les plans contenant chaque serpentin étant parallèles entre eux.

11. Dispositif de régulation selon l'une quelconque des revendications 1 à 10, comportant des moyens de brassage du matériau à changement de phase de manière à augmenter les phénomènes de convection.

12. Dispositif de régulation selon l'une quelconque des revendications 1 à 11, comportant des moyens de mesure de la quantité de PCM dans au moins une de ses phases.

13. Dispositif de régulation selon la revendication 12, dans lequel les moyens de mesure comprennent un capteur de pression d'un gaz contenu dans l'enceinte, la pression dudit gaz variant en fonction de la quantité de PCM dans chacune de ses phases.

14. Installation de régulation de la température d'un fluide (A) comprenant :
- un dispositif de régulation (1) selon l'une quelconque des revendications 1 à 13,
- un évaporateur de groupe frigorifique dans lequel circule un fluide (B) relié au dispositif de régulation,
- un réseau de distribution de fluide (A),
- des moyens de raccordement entre le réseau dans lequel circulent le fluide (Λ) et le dispositif de régulation.

## Claims

1. A device for controlling the temperature of fluids to be treated (A) including:
- An enclosure (2) containing a phase-change material (PCM)
- At least two distribution ducts (6, 7), fitted in the aforementioned enclosure (2), allowing the separate circulation of the fluid to be treated (A) and a heat carrying fluid (B)
- A heat exchanger (8) for the simultaneous direct transfer of energy between the fluids (A) and (B) and indirect transfer by restitution of the energy transmitted by the heat carrying fluid (B) stored by the phase-change material; it includes a distribution system for modifying the allocation of circuits between each fluid (A, B) depending on the device's way of functioning

2. A controller designed for claim 1, in which the heat exchanger has many fins (11) with openings for the ducts (6, 7) fixed on the outer surface of the ducts (6, 7)

3. A controller designed for claim 2, in which the fin (11) consists of a plate

4. A controller designed for claim 2 or 3, in which the thickness of each fin (11) ranges between 0.1 and 1 mm

5. A controller designed for any of claims 2 to 4, in which the fins (11) are laid out parallel to each other

6. A controller designed for claim 5, in which the distance between the two fins ranges between 2 and 20 mm

7. A controller designed for any of claims 2 to 6, in which the ends of the fins are extended outside the space defined by the contours of the distribution ducts (6, 7)

8. A controller designed for any of claims 1 to 7, in which 60% to 70% of the total volume of the PCM of the enclosure is contained in the space defined by the distribution ducts

9. A controller designed for any of claims 1 to 8, in which the distribution ducts (6, 7) have means for intensifying exchanges on their inner surfaces

10. A controller designed for any of claims 1 to the 9, in which each duct forms a serpentine; the sections containing each serpentine are parallel to each other

11. A controller designed for any of claims 1 to 10, comprising means for mixing the phase-change material to increase convection

12. A controller designed for any of claims 1 to 11, comprising means for measuring the quantity of PCM in at least one of its phases

13. A controller designed for claim 12, in which the means for measuring include a gas pressure sensor in the enclosure; the pressure of the gas varies according to the quantity of PCM in each of its phases

14. A fluid temperature control system (A) including:
- A controller (1) designed for any of claims 1 to 13
- A refrigeration unit evaporator in which circulates a fluid (B) connected to the controller
- A fluid distribution system (A)
- A connection between the system in which circulates the fluid (A) and the controller

## Patentansprüche

1. Vorrichtung für die Regelung der Temperatur eines zu behandelnden Fluids (A), bestehend aus:
- einem Behälter (2), der ein Material mit Phasenumwandlung (PCM) enthält,
- mindestens zwei Verteilerleitungen (6, 7), die im besagten Behälter (2) angeordnet sind und welche es ermöglichen, dass das zu behandelnde Fluid (A) und ein Fluid (B), Vektor für thermische Energie, getrennt zirkulieren können,
- Mittel zum thermischen Austausch (8), die gleichzeitig einen direkten Energietransfer zwischen den Fluids (A) und (B) ermöglichen und einen indirekten Transfer durch Wiederherstellung von Energie, die durch das Fluid (B), Vektor für thermische Energie, übertragen wird und vom Material mit Phasenumwandlung gespeichert wird, **gekennzeichnet durch** die Eigenschaft, dass es Verteilermittel umfasst, welche es ermöglichen, die Aufteilung der Verteilerkreisläufe zwischen den Fluids (A, B) je nach Betriebsmodus der Vorrichtung zu ändern.

2. Vorrichtung zur Regelung gemäß Anspruch 1, in welchem die Mittel des thermischen Austauschs eine Vielzahl von Rippen (11) enthalten, welche über Öffnungen für den Durchlass der Leitungen (6, 7) verfügen und die an der äußeren Oberfläche der genannten Leitungen (6, 7) befestigt sind.

3. Vorrichtung zur Regelung gemäß Anspruch 2, im welchem die genannte Rippe (11) aus einer Platte besteht.

4. Vorrichtung zur Regelung gemäß Anspruch 2 oder 3, in welchem die Dicke jede Rippe (11) zwischen 0,1 und 1 mm liegt.

5. Vorrichtung zur Regelung gemäß eines der Ansprüche 2 bis 4, in welchem die Rippen (11) parallel zueinander angeordnet sind.

6. Vorrichtung zur Regelung gemäß Anspruch 5, in welchem der Abstand zwischen den beiden Rippen zwischen 2 und 20 mm beträgt.

7. Vorrichtung zur Regelung gemäß eines der Ansprüche 2 bis 6, in welchem sich das Ende der Rippen über das Volumen hinaus erstrecken, das durch den Umfang der Verteilerleitungen (6, 7) vorgegeben ist.

8. Vorrichtung zur Regelung gemäß eines der Ansprüche 1 bis 7, in welchem 60% bis 70% des Gesamtvolumens des PCM des Behälters in dem Volumen enthalten ist, welches die Verteilerleitungen vorgeben.

9. Vorrichtung zur Regelung gemäß eines der Ansprüche 1 bis 8, in welchem die Verteilerleitungen (6, 7) an ihrer Innenfläche Mittel zur Austauschverstärkung enthalten.

10. Vorrichtung zur Regelung gemäß eines der Ansprüche 1 bis 9, in welchem jede Leitung eine Schlange bildet, wobei die Ebenen, welche die einzelnen Schlangen enthalten, zueinander parallel sind.

11. Vorrichtung zur Regelung gemäß eines der Ansprüche 1 bis 10, welcher Mittel zur Vermengung des Materials mit Phasenumwandlung enthält, so dass die Konvektionsphänomene verstärkt werden.

12. Vorrichtung zur Regelung gemäß eines der Ansprüche 1 bis 11, welcher Mittel zur Messung der Phasenumwandlungsmenge in mindestens einer der Phasen enthält.

13. Vorrichtung zur Regelung gemäß des Anspruchs 12, in welchem die Messmittel einen Druckfühler für ein Gas enthalten, das sich im Behälter befindet, wobei der Druck des besagten Gases sich in Abhängigkeit von der Menge an Phasenumwandler in jeder der Phasen ändert.

14. Regulieranlage für die Temperatur eines Fluids (A), bestehend aus:
- einer Vorrichtung zur Regelung (1) gemäß eines der Ansprüche 1 bis 13,
- einem Verdampfer des Kühlblocks, in welchem ein Fluid (B) zirkuliert, der mit der Vorrichtung zur Regelung verbunden ist,
- ein Verteilernetz für das Fluid (A),
- Verbindungselemente zwischen dem Netz, in dem das Fluid (A) zirkuliert und der Vorrichtung zur Regelung.
